Europäisches Patentamt

European Patent Office

Office européen des brevets

(11) Numéro de publication: **0 275 795 B1**

# FASCICULE DE BREVET EUROPEEN

(45) Date de publication de fascicule du brevet: **03.06.92**  (51) Int. Cl.⁵: **G02B 6/12**, G02B 5/18

(21) Numéro de dépôt: **87402995.2**

(22) Date de dépôt: **28.12.87**

(54) **Multiplexeur-démultiplexeur utilisant un réseau concave elliptique et réalisé en optique intégrée.**

(30) Priorité: **31.12.86 FR 8618434**

(43) Date de publication de la demande:
**27.07.88 Bulletin 88/30**

(45) Mention de la délivrance du brevet:
**03.06.92 Bulletin 92/23**

(84) Etats contractants désignés:
**BE DE GB IT LU NL**

(56) Documents cités:
**EP-A- 0 149 270
US-A- 4 523 803**

(73) Titulaire: **COMMISSARIAT A L'ENERGIE ATO-
MIQUE Etablissement de Caractère Scientifique Technique et Industriel
31/33, rue de la Fédération
F-75015 Paris(FR)**

(72) Inventeur: **Gidon, Pierre
9, Avenue du Grésivaudan
F-38130 Echirolles(FR)**
Inventeur: **Jadot, Jean-Pierre
6, Impasse des Léchères
F-38240 Meylan(FR)**
Inventeur: **Valette, Serge
41, rue des Eaux Claires
F-38000 Grenoble(FR)**

(74) Mandataire: **Mongrédien, André et al
c/o BREVATOME 25, rue de Ponthieu
F-75008 Paris(FR)**

Rank Xerox (UK) Business Services

## Description

La présente invention a pour objet un multiplexeur-démultiplexeur optique. Elle trouve une application en télécommunications optiques.

On sait que le multiplexage en longueur d'onde permet d'accroître le débit d'information d'une liaison optique. Cette technique consiste à introduire à l'une des extrémités de la liaison plusieurs (N) faisceaux lumineux de longueurs d'onde différentes $\lambda 1$, $\lambda 2$,..., $\lambda N$ dans une même fibre optique (opération de multiplexage), puis à extraire, à l'autre extrémité de la liaison, les différentes longueurs d'onde pour restituer les faisceaux d'origine (opération de démultiplexage).

Bien que très intéressante, cette technique n'est cependant pas sans poser quelques problèmes. Il faut en effet que :
- les pertes globales des dispositifs de multiplexage et de démultiplexage soient faibles,
- les dispositifs de multiplexage ou de démultiplexage soient réversibles, c'est-à-dire qu'ils puissent fonctionner en multiplexeur dans un sens et en démultiplexeur dans l'autre,
- le coût soit faible.

Le dispositif de l'invention permet de répondre à ces trois exigences grâce à l'utilisation de l'optique intégrée et d'un réseau de diffraction d'un type particulier.

Une structure de guidage en optique intégrée comprend classiquement un substrat recouvert d'un empilement de trois couches transparentes, la couche intermédiaire ayant un indice de réfraction plus fort que l'indice des deux couches qui l'encadrent.

Selon l'invention, cette structure de guidage comprend :
- deux faces (F1, F2) sensiblement perpendiculaires aux dioptres créés par lesdites couches transparentes,
- une pluralité de microguides optiques, en nombre égal au nombre de longueurs d'onde de travail, ces microguides ayant des premières extrémités qui affleurent à la surface de l'une desdites faces de la structure de guidage avec, entre elles, un écartement suffisant pour pouvoir être couplées à autant de fibres optiques, ces microguides se resserrant les uns vers les autres en pénétrant dans la structure et présentant des secondes extrémités resserrées et réparties le long d'un segment,
- un microguide optique unique ayant une première extrémité affleurant à la surface d'une autre face de la structure de guidage et une seconde extrémité disposée à l'intérieur de la structure,
- un réseau de diffraction concave et réfléchissant constitué de facettes gravées dans l'empilement de couches, les facettes ayant comme section droite des segments d'ellipses dont les deux foyers coïncident respectivement, pour l'un, avec la seconde extrémité du guide optique unique et pour l'autre, avec les différentes secondes extrémités de la pluralité de guides optiques pour chacune des longueurs d'onde de travail de ces guides.

De toute façon, les caractéristiques de l'invention apparaîtront mieux à la lumière de la description qui va suivre. Cette description se réfère à des dessins annexés sur lesquels :
- la figure 1 représente une vue schématique du multiplexeur-démultiplexeur de l'invention,
- la figure 2 est une figure géométrique montrant le principe de la focalisation par une famille de miroirs elliptiques fonctionnant à une longueur d'onde $\lambda 1$ ;
- la figure 3 est une figure géométrique analogue à la précédente mais pour une longueur d'onde $\lambda N$,
- la figure 4 est une figure géométrique montrant une famille d'hyperboles,
- la figure 5 illustre une construction géométrique permettant de définir les différentes facettes du réseau,
- la figure 6 montre en coupe un réseau blazé plan,
- la figure 7 montre, en coupe, la structure de guidage optique au niveau d'une facette réfléchissante du réseau,
- la figure 8 montre, en coupe, un microguide optique,
- la figure 9 montre une première disposition des différents éléments du multiplexeur-démultiplexeur de l'invention,
- la figure 10 montre une seconde disposition de ces mêmes éléments.

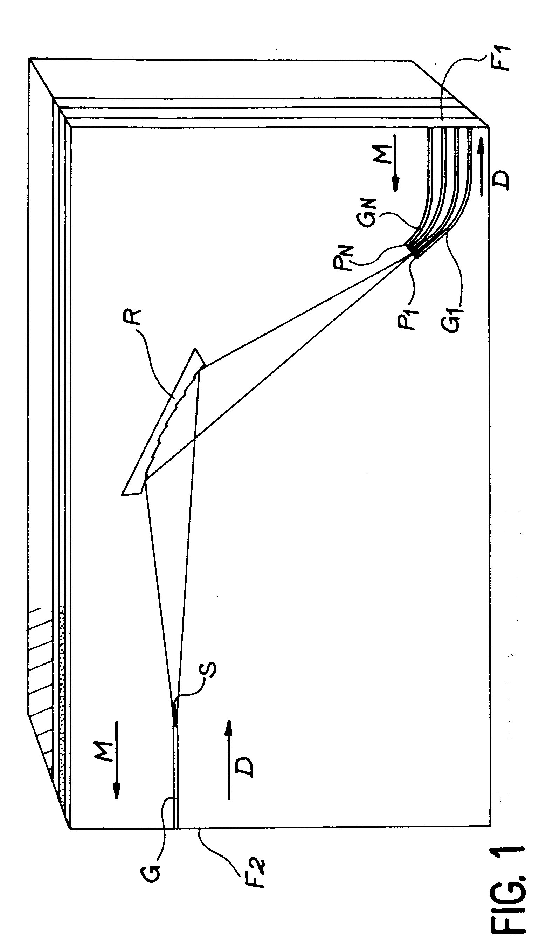

La structure représentée sur la figure 1 présente deux faces F1 et F2. Une pluralité de N microguides G1, G2,..., GN (dans le cas illustré N = 4) affleurent à la surface de la face F1. Sur cette face, l'écartement des microguides est par exemple de 125 $\mu$m environ pour permettre un couplage avec des fibres optiques (non représentées) qui ont sensiblement ce diamètre.

En pénétrant dans la structure de guidage, ces microguides se resserrent. Leurs extrémités se répartissent sur un segment entre des points extrêmes P1 et PN.

Sur l'autre face F2, on trouve un microguide unique G dont une extrémité affleure à la surface de F2 et dont l'autre extrémité S est à l'intérieur de la structure.

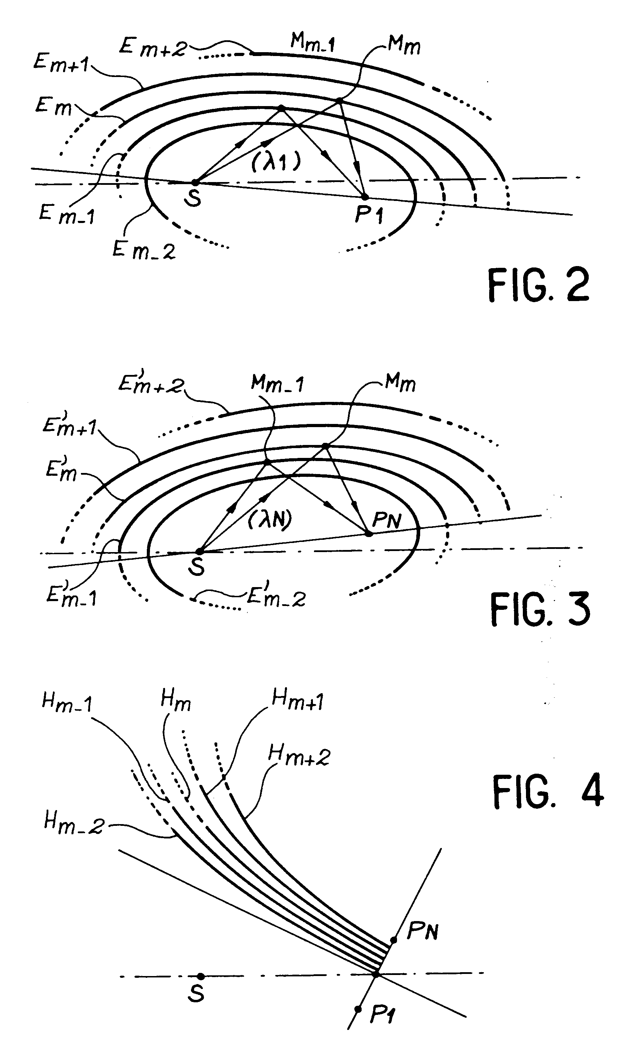

Entre la pluralité des N microguides G1, G2,..., GN et le microguide unique G se trouve un réseau de diffraction R, constitué de facettes réfléchissantes de section elliptique dont la forme va être décrite en liaison avec les figures 2 à 5.

Sur la figure 2, on voit un point S, supposé être un point source, et un point P1 supposé être un point image. Des miroirs elliptiques conjuguent optiquement ces deux points pour une longueur d'onde λ1. Chaque ellipse Em est le lieu des points pour lesquels on a la relation :

SMm + MmP1 = mλ1 (1)

où m est un entier, relation qui traduit la constance du chemin optique entre les points S et P1 (principe de Fermat).

A chaque valeur de m correspond une ellipse. La figure 2 montre ainsi une famille d'ellipses Em-1, Em, Em + 1, etc. paramétrées par l'entier m.

La figure 3 représente une autre famille d'ellipses correspondant au même point S mais à un autre point conjugué, soit PN, et pour une autre longueur d'onde λN.

Chaque ellipse E'm correspond à la relation :

SMm + MmPN = m λN (2)

où m est encore un entier. Un point Mm peut être à la fois sur l'ellipse Em de la première famille et sur l'ellipse E'm correspondant à la seconde famille, si les relations (1) et (2) sont toutes deux satisfaites pour ce point. Si tel est le cas, par soustraction membre à membre, de ces deux relations, on obtient la condition :

MmP1 - MmPN = m(λ1 - λN) (3)

La relation (3) signifie que le point Mm est sur une hyperbole dont les foyers sont les points P1 et PN.

La figure 4 montre une famille d'hyperboles Hm-1, Hm, Hm + 1, etc. ayant pour foyers les points P1 et PN. Ces hyperboles sont les lieux de points satisfaisant à la relation (3).

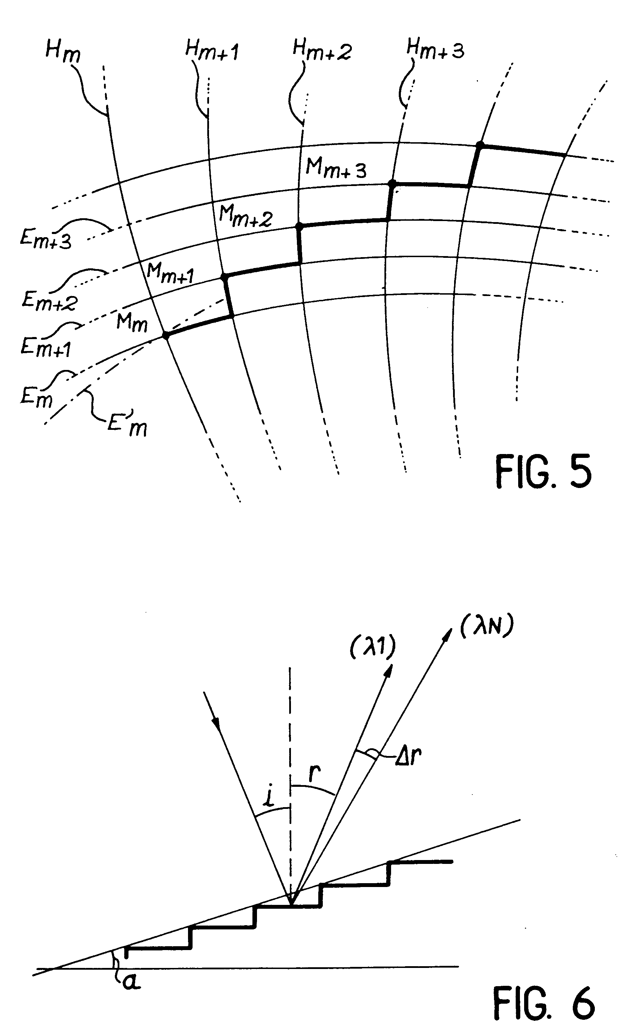

La figure 5 montre cette famille d'hyperboles (Hm) et l'une des deux familles d'ellipse en l'occurrence la famille Em. L'intersection de l'hyperbole Hm avec l'ellipse Em donne un point Mm qui est, évidemment, sur l'ellipse Em, mais qui est aussi sur l'ellipse E'm (représentée en tirets).

Les points Mm + 1, Mm + 2, etc. situés sur les hyperboles Hm + 1, Hm + 2,... se trouvent donc être à la fois sur les ellipses Mm + 1 et M'm + 1, Mm + 2 et M'm + 2, etc.

Si l'on trace une ligne allant de point en point selon ce principe, on obtient le profil d'un réseau de diffraction qui aura la particularité de conjuguer optiquement les points S et P1 pour la longueur d'onde λ1 et les points S et PN pour la longueur d'onde λN.

Naturellement, il reste un certain arbitraire pour passer d'une ellipse à l'autre : sur la figure 5, la marche est perpendiculaire aux ellipses mais on pourraît tout aussi bien choisir un profil incliné.

C'est de cette manière qu'est conçu le réseau R de la figure 1. Les points P1 et PN sont les deux points extrêmes du segment sur lequel débouchent les différents microguides fonctionnant aux longueurs d'onde λ1 et λN. Les points intermédiaires seront conjugués de S mais pour les longueurs d'onde intermédiaires.

Si l'on en revient à la figure 1, on voit que le dispositif représenté, lorsqu'il fonctionne en multiplexeur, reçoit une pluralité de faisceaux lumineux sur sa face F1 et délivre un faisceau unique multi-longueurs d'onde sur sa face F2 (flèche M). En démultiplexeur, le dispositif reçoit un faisceau multi-longueurs d'onde sur sa face F2 et délivre une pluralité de faisceaux de longueurs d'onde différentes sur sa face F1 (flèche D).

La dispersion du réseau de l'invention peut être calculée approximativement en considérant qu'au voisinage de son axe, le réseau peut être assimilé à un réseau plan, tel que représenté sur la figure 6. Les angles i et r désignent les angles des faisceaux incident sur et réfléchi par les facettes, comptés à partir de la normale aux facettes des miroirs.

L'angle a désigne l'angle de blaze du réseau.

On peut montrer que la différence Δr entre les angles de réflexion des faisceaux correspondant aux longueurs d'onde λ1 et λN est égale à m(λN - λ1)/p.cos(i-α).

On aura par exemple, un pas moyen de 40 μm, un angle a de 4° et m = 1.

La distance focale du miroir sera de l'ordre de 10 mm. L'espacement entre les points P1, P2,...PN sera voisin de 12 μm pour un écart de longueur d'onde entre les différents canaux de 20 nm.

L'angle i peut être choisi relativement élevé (par exemple proche de 65°).

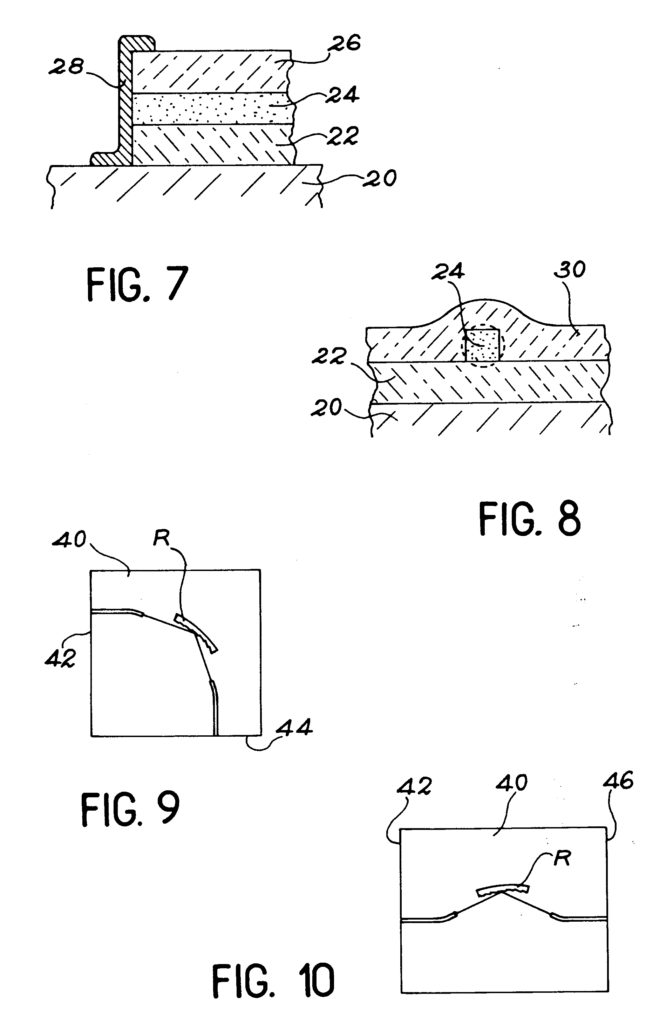

La figure 7 montre, en coupe, une structure de guidage avec un substrat 20, par exemple en silicium, une première couche 22 en $SiO_2$, de 6 à 8 μm d'épaisseur, une seconde couche 24 en $SiO_2$ dopé en phosphore, d'épaisseur environ 4 à 5 μm, une troisième couche 26, en $SiO_2$ d'épaisseur 6 à 8 μm.

L'écart d'indice entre la couche 24 et les couches adjacentes 22 et 26 est faible et de l'ordre de $10^{-3}$ à $10^{-2}$, comme c'est le cas pour les fibres optiques entre le coeur et la gaine.

Cet empilement peut être gravé jusqu'au substrat pour constituer une face réfléchissante fonctionnant en réflexion totale. Cette face gravée peut également être recouverte d'une couche métallique 28, par exemple d'aluminium.

Pour constituer le réseau, on dessinera donc, sur la structure de guidage, des segments elliptiques, répondant au critère de la figure 5, par exemple par masquage électronique, et l'on gravera la structure le long de ces segments.

Pour obtenir des microguides, on peut graver la couche 24 de la figure 7, comme illustré sur la figure 8, puis recouvrir l'ensemble gravé par une couche 30 de $SiO_2$. Le faisceau lumineux dont la section est hachurée sur la figure sera guidé par conduit 24.

Les figures 9 et 10 montrent deux dispositions de l'ensemble décrit. Sur la figure 9, la plaquette 40 travaille sur ses faces 42 et 44 qui sont orthogonales et sur la figure 10 sur ses faces 42 et 46 qui sont parallèles.

Le multiplexeur-démultiplexeur qui vient d'être décrit fonctionne avec des faisceaux lumineux dont les longueurs d'onde sont proches (environ 20 nm). Il peut être combiné avec un multiplexeur-démultiplexeur tel que celui qui est décrit dans la demande de brevet français n° 2 579 044 déposée le 13 mars 1983 au nom du Demandeur. Un tel dispositif comprend des réseaux de diffraction placés en série, chacun diffractant une plage de longueur d'onde particulière. A la sortie de chacun de ces réseaux, on peut disposer un dispositif selon la présente invention, qui fonctionnera sur des faisceaux dont les longueurs d'onde seront situées dans cette plage. On obtient aussi un multiplexage-démultiplexage dans chaque plage sur des longueurs d'onde rapprochées.

**Revendications**

1.  Multiplexeur-démultiplexeur en optique intégrée destiné à travailler à une pluralité de longueurs d'onde différentes, comprenant une structure de guidage composée d'un substrat (20) recouvert d'un empilement de trois couches transparentes, une première couche (22), une deuxième couche (24) et une troisième couche (26), la deuxième couche (24) ayant un indice de réfraction plus fort que l'indice des première (22) et troisième (26) couches qui l'encadrent ; ledit multiplexeur-demultiplexeur étant caractérisé par le fait que cette structure de guidage comprend :

    - deux faces (F1, F2) sensiblement perpendiculaires aux dioptres créés par lesdites couches transparentes,
    - une pluralité de microguides optiques (G1, G2,..., GN), en nombre N égal au nombre de longueurs d'onde de travail, ces microguides ayant des premières extrémités qui affleurent à la surface de l'une desdites faces (F1) de la structure de guidage avec, entre elles, un écartement suffisant pour pouvoir être couplées à autant de fibres optiques, ces microguides se resserrant les uns vers les autres en pénétrant dans la structure et présentant des secondes extrémités (P1, P2,..., PN) resserrées et réparties le long d'un segment (P1...PN),

    - un microguide optique unique (G) ayant une première extrémité affleurant à la surface d'une autre face (F2) de la structure de guidage et une seconde extrémité (S) disposée à l'intérieur de la structure,
    - un réseau de diffraction (R) concave et réfléchissant constitué de facettes gravées dans l'empilement de couches, les facettes ayant comme section droite des segments d'ellipses dont les deux foyers coïncident, respectivement, pour l'un, avec la seconde extrémité (S) du guide optique unique (G) et pour l'autre, avec les différentes secondes extrémités (P1, P2,..., PN) de la pluralité de guides optiques (G1, G2,..., GN) pour chacune des longueurs d'onde de travail de ces guides.

**Claims**

1.  Multiplexer-demultiplexer in integrated optics, for operating at a plurality of different wavelengths, comprising a guidance structure formed by a substrate (20) covered by a stack of three transparent layers, a first layer (22), a second layer (24) and a third layer (26), the second layer (24) having a higher refraction index than that of the first (22)and third (26) layers surrounding it, said multiplexer-demultiplexer being characterized in that said guidance structure comprises:
    two faces (F1, F2) substantially perpendicular to the diopters created by said transparent layers;
    a plurality of optical microguides (G1, G2, ..., GN) whose number (N) is equal to the number of operating wavelengths, said microguides having first ends which are level with the surface of one of said faces (F1) of the guidance structure with, between them, an adequate spacing to permit coupling to the same number of optical fibres, said microguides being drawn towards one another whilst penetrating the structure and having second drawn together ends (P1, P2, ..., PN) distributed along a segment (P1, ..., PN);
    a single microguide (G) having a first end level with the surface of another face (F2) of the guidance structure and a second end (S) disposed within the structure;
    a reflecting, concave diffraction grating (R) constituted by facets etched in the stack of layers, the facets having as the cross-section ellipse segments, whereof the two foci coincide respectively the the one case with the second end (S) of the single optical guide (G) and in the other with the different seconds ends (P1, P2, ..., PN) of the plurality of optical guides (G1, G2, ..., GN) for each of the operating wavelengths of said guides.

**Patentansprüche**

1. Multiplexer/Demultiplexer in integrierter Optik, der dazu bestimmt ist, in einer Mehrzahl von verschiedenen Wellenlängen zu arbeiten und eine Führungsstruktur umfaßt, die aus einem mit einer Anordnung von drei durchsichtigen Schichten, nämlich einer ersten Schicht (22), einer zweiten Schicht (24) und einer dritten Schicht (26), bedeckten Substrat (20) besteht, wobei die zweite Schicht (24) einen höheren Brechungsindex besitzt als der Index der ersten (22) und dritten (26) Schicht, die sie umgeben, wobei der Multiplexer/Demultiplexer dadurch gekennzeichnet ist, daß diese Führungsstruktur umfaßt:
   - zwei Seiten (F1, F2), die im wesentlichen senkrecht zu den von den durchsichtigen Schichten erzeugten Dioptern sind,
   - eine Mehrzahl von optischen Mikroführungen (G1, G2, ..., GN) mit einer Anzahl N gleich der Anzahl der Arbeitswellenlängen, wobei diese Mikroführungen erste Enden besitzen, die mit der Oberfläche der einen der Seiten (F1) der Führungsstruktur bündig sind mit einem ausreichenden Abstand dazwischen, um mit ebensovielen optischen Fasern verbunden werden zu können, wobei sich diese Mikroführungen zusammenziehen, indem sie in die Struktur eindringen und zweite Enden (P1, P2, ..., PN) aufweisen, die entlang eines Segments (P1...PN) aufgeteilt und zusammengezogen sind,
   - eine einfache optische Mikroführung (G), die ein erstes Ende, das mit der Oberfläche einer anderen Seite (F2) der Führungsstruktur bündig ist, und ein zweites Ende (S) besitzt, das im Inneren der Struktur angeordnet ist,
   - ein konkaves und reflektierendes Beugungsgitter (R), das aus in die Schichtanordnung geätzten Flächen besteht, wobei die Flächen als gerader Querschnitt Ellipsensegmente besitzen, deren beide Brennpunkte zum einen mit dem zweiten Ende (S) der einfachen optischen Führung (G) und zum anderen mit den verschiedenen zweiten Enden (P1, P2, ..., PN) der Mehrzahl von optischen Führungen (G1, G2, ..., GN) für jede der Arbeitswellenlängen dieser Führungen zusammenfallen.

EP 0 275 795 B1

**FIG. 1**

FIG. 2

FIG. 3

FIG. 4

FIG. 5

FIG. 6

FIG. 7

FIG. 8

FIG. 9

FIG. 10